# EUROPEAN PATENT SPECIFICATION

(11) **EP 2 231 299 B1**
(45) Date of publication and mention of the grant of the patent: **31.12.2014**
(21) Application number: 08870930.8
(22) Date of filing: 14.11.2008
(51) Int. Cl.: B01D 33/80, B01D 33/048

(54) **METHOD AND SYSTEM FOR PARTICLE REDUCTION.**
VERFAHREN UND SYSTEM ZUR PARTIKELREDUKTION
PROCÉDÉ ET SYSTÈME DE RÉDUCTION DE PARTICULES

(30) Priority: 15.01.2008 NO 20080267
(43) Date of publication of application: 29.09.2010
(73) Proprietor: Salsnes Filter AS, 7801 Namsos (NO)
(72) Inventor: SOLVI, Ivar, N-7800 Namsos (NO)
(74) Representative: Curo AS
(86) International application number: PCT/NO2008/000405
(87) International publication number: WO 2009/091260

(56) References cited:
- WO-A1-01/56681
- WO-A1-96/25993
- GB-A- 2 069 858
- US-A- 5 202 017

## Description

The invention relates to a method for creating a filter mat on a filter belt to achieve maximal purification efficiency/particle reduction, according to the preamble of claim 1. The invention also relates to a system for carrying out the method, according to claim 9.

### Background

Treatment plants with endless filter belts have until now not been optimized in relation to creating a filter mat as regards achieving maximal particle reduction.

Until now, only a plain control of endless filer belts exists, where the filter belt is controlled by that fluid is supplied, and the speed of the filter belt is defined by the level in a sieve. The disadvantage of such systems is however that the speed increases too quickly and is not varied according to the total amounts of fluid which are to pass through the system. It exists thus a need for a solution where the endless filter belt can be controlled in relation to the supplied fluid amount to the system. This will be a requirement to be able to maximize the purification efficiency the filter belt can provide.

From US 4 867 886 it is known the use of a sensor to measure the height of a substance on the belt and thus control the supplied amount through a valve or pump.

US 4 137 062 is an example of the use of sensors to measure clogging of a belt.

US 4 587 023 is an example of the use of a sensor to control the supply to the belt.

Further controlled belt filters are disclosed in GB 2069858 and WO 96/25993.

None of the prior art solutions disclose or suggest a solution which provides maximal filtering properties, as none of the prior art systems take into consideration the total supplied fluid amount, and on basis of this maximize the thickness of a substance which is created on the filter belt which thus provides maximal purification efficiency/particle reduction in relation to supplied amount.

### Object

The object of the invention is to provide a method for creating a filter mat on a filter belt to achieve maximal cleaning effect/particle reduction. It is further an object to process the actual fluid amount supplied and changing constantly. It is further an object to provide a system for carrying out the method.

### The invention

A method according to the invention is described in claim 1. Further advantageous features of the invention are described in claims 2-8.

A system for carrying out the method according to the invention is described in claim 9. Advantageous features of the system are described in claims 10-13.

A method according to the invention is based on utilizing information on how much fluid supplied to a inlet chamber at any time, and the fluid level in the inlet chamber, in which inlet chamber a filter belt runs, for controlling the filter belt to create as thick filter mat on the filter belt as possible, to achieve as good purification efficiency/particle reduction as possible, and at the same time the information is used to control the filter belt to avoid that the inlet chamber/filter belt overflows. The overflow is generally brought back to the inlet and will then provide lower capacity, if not, the purification efficiency/particle reduction will be reduced because of uncleaned fluid goes directly to the outlet and increases the pollution or because the overflow (normally for larger plants with several purification steps biology/chemistry/membrane) goes to the next purification step and overloads the system, or that the operating costs increase due to increased supply of oxygen becomes necessary.

By evaluating/interpreting the information on supplied fluid amount and from this choose the proper operating mode from different predefined operating modes for running the filter belt, a filter mat as thick as possible can be created. The terms and settings for the different predefined operating modes are adapted to the dimensioning of the plant.

The thicker filter mat which is achieved, the better purification effect is achieved. In principle there are none limits for how thick the filter mat can become, but as fluid now longer penetrates, this will result in that the fluid overflows. The thickness of the filter mat will be affected of the nature of the particles. Gravel, fiber or coarse particles will more easily let fluid pass than, for example, organically broken down particles and digested sludge (hygroscopic particles). As you know how much maximum fluid supplied to the plant, and you know circa what is the minimum and average, these can be used at the setting of the different predefined operating modes. For many plants also the frequency of the different amounts is known, i.e. how often the amounts occur and at which time they occur, information which can be used to optimize the system further. The most municipal plants are monitored by a monitoring central, which can be used to provide information to the system according to the invention. In generally is a pump station used to send the fluid/waste water to a plant. The pump station pumps preferably with frequency control, so that the fluid flow becomes as even as possible. Means for amount measuring are arranged to/in the inlet and will therefore provide information on if there is a period of, for example, large, average or small fluid amounts, or other actual fluid amounts there between. The method preferably includes three or more operating modes, where the plainest version includes operating modes for maximal, average/normal or minimum fluid amounts.

The defined operating modes provide information to the drive means for running the filter belt, which means control the belt speed in relation to the actual supplied fluid amount, to achieve a desired thickness of the filter mat, to achieve maximal purification efficiency/particle reduction, at the same time as the actual fluid amount is being processed, and to avoid overflow.

The thickness of the filter mat provides better purification efficiency by that when large particles are captured by the filter mat, these will retain smaller particles which again will retain even smaller particles, until the filter belt is blocked. When there no longer is a flow through the filter mat, its maximal thickness is reached, and it has no longer purification efficiency. Information on this will be provided by the level in the inlet chamber for the filter. As the level is close to overflow, this will mean that the filter mat is clogged, or that the speed of the filter is not high enough to take away the actual fluid amount. This is the background for that different modes must be defined to prepare for different fluid levels/amounts and speeds of the filter belt.

Many different types of filter belt can be used which will have different purification efficiency/properties and the defined operating modes must therefore be adapted to the actual type of filter belt, drive means, and the remaining dimensioning of the plant. For example, a filter belt having a small mesh size will more rapidly clog up than a filter belt having a large mesh size.

After the operating mode is chosen, the method further acquires information on the fluid level in the inlet chamber by means of suitable means for this. The information on the fluid level in the inlet chamber is used to affect the chosen operating mode by the determination of acceleration time, delay and retardation time for the drive means for the filter belt, in relation to the variations of fluid amount within the chosen operating mode, and the amount of particles which tells how fast the filter is clogged. As mentioned above, the fluid level in front of the filter belt will rise due to reduced capacity and the level is continuously registered by a level meter, which will inform that the filter belt is about to clog up, or that the speed of the filter belt is too low. This will be show in capacity and level in relation to the type of filter belt. I.e. that if there are few particles, there will go more fluid through the filter belt and filter mat before it clogs up (hydraulic capacity).

Acceleration time, delay and retardation time will accordingly vary for the different operating modes, as it is important to provide a rapid start and late reduction of the speed and short delay at large fluid amounts in relation to small fluid amounts.

It is important at large fluid amounts to provide a rapid start to avoid that fluid is supplied so quickly to the filter belt that the drive means are started to late to avoid that the filter belt overflows. At small fluid amounts, a start at a higher fluid level and less rapid velocity can be allowed. After the fluid is purified by the filter belt, the fluid is supplied to an outlet chamber.

The method according to the invention can be summarized in the following steps:
a) measuring an amount of fluid currently being supplied to an inlet chamber by measuring means arranged to or within an inlet of the inlet chamber,
b) based on supplied fluid amount choose operating mode defining predefined start and stop levels in the inlet chamber in relation to supplied fluid amount and predefined speed of the filter belt for the different levels as settings for drive means controlling the filter belt to maintain high fluid level in the inlet chamber and low speed of the filter belt in relation to supplied fluid amount and amount of particles, for therethrough to maximize thickness of substance creating a filter mat on the filter belt without the filter belt being overflown,
c) measuring fluid level in the inlet chamber by means of level measuring means (15) arranged in connection with the inlet chamber to gain information concerning a variation in fluid amount and amount of particles,,
d) adjusting acceleration time, delay and retardation time for the chosen operating mode based on information about the variation in the fluid level and amount of particles in the inlet chamber and providing information to the drive means for controlling the speed of the filter belt to affect the chosen operating mode,
e) acquiring information on actual state of the drive means and filter belt to continuously adjust the settings for the drive means based on the difference between actual state and adjusted acceleration time, delay and retardation time,
f) Continuously repeating the steps a)-e).

Step a) includes acquiring information on the supplied fluid amount, at any time, to an inlet chamber, wherein a filter belt runs, where the actual supplied fluid amount, at any time, is measured by means of suitable means, such as a flow meter, which preferably is arranged at the supply of the inlet chamber. The information on the actual supplied fluid amount is provided to the control means for the system.

Step b) includes evaluating/interpreting the supplied fluid amount, at any time, and choose operating mode according to history among different predefined operating modes, e.g. minimum-average-maximum supplied fluid amount, defining start and stop levels in the inlet chamber in relation to the actual supplied fluid amount, and defining speed of the filter belt for the different levels. Step b) is carried out by the control means, which control means are provided with software/algorithms and/or programmed for this.

Step c) includes measuring fluid level in the inlet chamber by means of suitable means for this, such as a level meter, which information is provided to the control means for the system.

Step d) includes adjusting acceleration time, delay and retardation time for the drive means for the filter belt, based on information from step c) about variations within the chosen operating mode, which is carried out by the control means, which control means are provided with software/algorithms and/or programmed for this.

Step d) also includes providing the drive means for the filter belt with settings based on steps a)-d).

Step e) includes acquiring information on the state of the filter belt and drive means for the filter belt to the control means for continuous adjustment of the settings in step d).

Step f) includes repeating the steps a)-f) continuously as long as the plant is set to run.

A system according to the invention for carrying out the method includes one or more endless rotating filter belts which are run by suitable drive means. The system further includes an inlet, which supplies fluid to an inlet chamber. The endless filter belt(s) extend(s) into the inlet chamber to perform purification/particle reduction of the supplied fluid. The inlet chamber is further provided with means for providing information on the fluid level in the inlet chamber. To the inlet arranged is means for measuring supplied fluid amount to provide information on the actual supplied fluid amount, at any time. The system further includes software/algorithms and/or is programmed for controlling the system. The system preferably further includes state means to provide information on the state of the drive means and the filter belt.

The system preferably further includes means for removing sludge from the filter belt and means for purification of the filter belt, for example, as shown in the Norwegian Patents No. 310182 and 178608, in the name of the applicant. To be able to achieve as thick/effective filter mat as possible it is important that means for removing of sludge which includes a mechanical contact on the particle side of the filter belt is not used, as a mechanical contact at the particle side will result in that the particles are crushed/damaged/pushed through the filter belt, which could result in that the filter belt is clogged from pushing particles through the filter belt, and thus reducing the rate of particle removal/ purification efficiency, by particle escape through the filter belt to the outlet water, or lacking hydraulic capacity so that uncleaned fluid overflows. It is therefore a great advantage that the means used for purification are of a type as described in the Norwegian Patents No. 310182 and 178608, in the name of the applicant. These are known solutions which will not be further described herein.

Further advantages and advantageous features of the invention will appear from the following example description.

### Example

The invention will below be described in detail in the form of an example with references to the attached drawings, where:

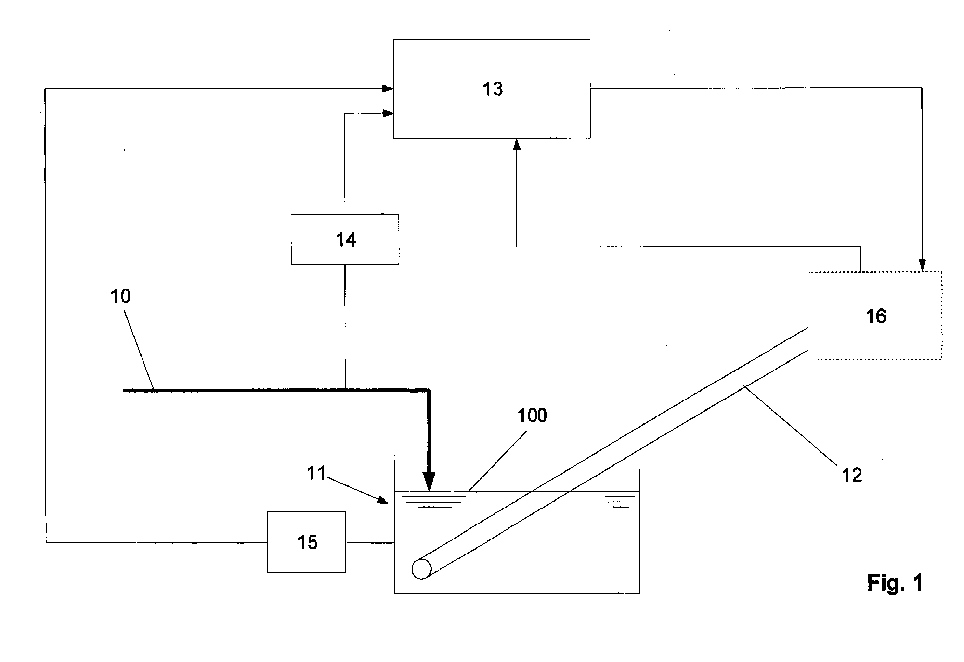

Figure 1 is a schematic overview of a system according to the invention, and
Figure is an example of three different operating modes.

Figure 1 is a schematic overview of a system according to the invention for carrying out a method according to the invention. The figure also shows the flow of information in/of the system/method. A system according to the invention includes an inlet 10, which inlet 10 supply fluid, such as sewer, waste water or similar, to an inlet chamber 11. Into the inlet chamber 11 runs an endless filter belt 12, which is to purify/remove particles from the supplied fluid in the inlet chamber 11. In addition the system includes control means 13, for example, in the form of one or more PLCs or similar suitable control means, which control means are provided with software/algorithms and/or is programmed for controlling the system, further described below. The control means 13 are provided with input from means 14 for measuring supplied fluid, such as an electromagnetic flow meter, which is arranged to/in the inlet 10 and provides information on the supplied fluid amount, at any time, to the inlet chamber 11. The control means 13 are further provided with input from means 15 for level measuring in the inlet chamber 11, such as a submersible pressure transmitter or similar suitable means for level measuring, arranged in the inlet chamber 11 to provide information on the fluid level 100 in the inlet chamber 11. In addition the system includes one or more drive means, illustrated by means of a block 16 in Figure 1, for the running the filter belt 12, such as frequency-controlled belt motors or other suitable means for running the filter belt. The system preferably further includes state means (not shown) to provide information to the control means 13 on the state of the filter belt 12 and/or drive means 16. The system preferably further includes means (not shown) for removing sludge from the filter belt 12 and means (not shown) for purifying the filter belt, for example, as shown in the Norwegian Patents No. 310182 and 178608, in the name of the applicant. It is, as mentioned above, an advantage that these are means which not mechanically come into contact with the filter belt at the particle side, as the particles easily will be damaged/crushed/pushed through the filter belt, which could result in that the filter belt is clogged by that particles are pushed through the filter belt, and thus reducing the rate of particle removal/purification efficiency, by particle escape through the filter to the outlet water or lacking hydraulic capacity so that uncleaned fluid overflows. It is therefore a great advantage that the used means for purifying are of the type as described in the Norwegian Patents No. 31082 and 178608, in the name of the applicant. These are known solutions which will not be described further herein.

The system preferably further includes means for signal adaptation/conversion between the different units, which will be dependent of which means being used and are not described in detail herein.

The control means 13 continuously reads the supplied fluid amount from the inlet 10 by means of the means 14 for amount measurement, arranged in the supply to the inlet chamber 11. The control means 13 interpret/evaluate the information from the flow meter 14 and choose an operating mode for running the filter belt 12 in relation to supplied fluid amount. The different operating modes are adapted/defined in the control means 13 in advance.

By use of frequency-controlled pumps to supply fluid to the inlet 10, this will result in that the fluid amount to be processed is even. This provides opportunities for, on basis of the frequency of the pumps, or most preferably a signal from the electromagnetic flow meter 14, defining modes which are according to low, normal/average or maximal fluid supply, or several variations between these.

The operating modes provide settings for the drive means 16 of the speed of the filter belt, adapted to the actual fluid amount to form as thick filter mat on the filter belt as possible, and at the same time avoiding that the filter belt/inlet chamber overflows. Similarly are stop and start levels in the inlet chamber defined in relation to the fluid amount for start and stop of the filter belt 12, and the speed of the filter belt.

After the operating mode is chosen, the control means 13 acquire information from the level meter 15 which provides information on level height 100 for fluid in the inlet chamber 11, and affects thus the chosen operating mode by that acceleration time, delay and retardation time for the drive means 16, in the example a frequency-controlled belt motor, are determined in relation to the variations of fluid amounts within the chosen operating mode, and the amount of particles which show how fast the filter belt will clog up.

Many different types of filter belts can be used which will have different purification efficiency/properties and the operating modes must thus be adapted to the actual type of filter belt, drive means and the remaining dimensioning of the plant. For example will a fine filter belt more rapid clog up than a coarse filter belt.

Acceleration time, delay and retardation time will accordingly vary for the different operating modes, as it is important to provide a rapid start and late reduction of speed and short delay at large fluid amounts in relation to small fluid amounts. These parameters will in addition be dependent of the properties of the drive means (belt motor(s)) and the filter belt.

All this will ensure that a filter mat can be created as thick as possible, as this ensures for the best possible purification efficiency and at the same time process the actual fluid amount which at any time is supplied and varies.

The system and method will thus ensure that even though a low amount of fluid is supplied, there is defined a high start level and low speed of the filter belt. This provides at all time the possibility to run the filter belt with a high level and with the lowest possible speed, independent of the supplied fluid amount to the plant. This is something which is not possible by prior art, as the filter belt quickly will increase to maximal fluid level, even if this is not necessary, with the result that a maximal thick filter mat cannot be created, and not improved particle removal.

The filter belt 12 has preferably an adapted defined particle size distribution. This is preferably so that 20 % of the particles in the fluid must be larger than the aperture to create a filter mat. This is dimensioned before the plant is installed and is based on analyzes performed during changing supplied fluid amounts. The properties of the drive means are adapted to the plant in advance and width and length of the filter mat are also adapted during the dimensioning of the plant.

The size of the inlet chamber will further also be dependent of the dimensioning of the plant. The dimensioning of a plant of this type is based on the following points:
1. Maximum supplied fluid amount.
2. Analysis of particle sizes to define actual aperture for creating a filter mat.
3. Sieving speed on a small test unit, e.g. the Salsnes tester.

By means of this you can find out how much fluid which can be filtered per m² filter belt/time to achieve as thick filter mat as desired, and how much particles which are desirable to remove, and from this dimensioning the numbers and size of the equipment. For example there exist filter belts from 0.15 m² to 2.2 m² sieve cloth, but also other types of filter belts exist and can be used in the system.

After the fluid is purified by the filter belt, the fluid is provided to an outlet chamber (not shown).

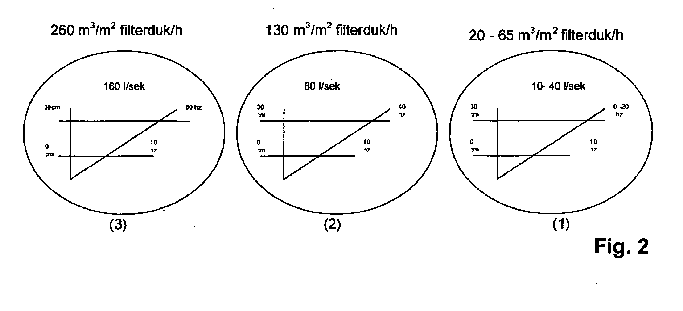

Referring now to Figure 2, showing an example of three different operating modes. (1) indicates operating mode for low fluid supply, (2) indicates operating mode for average/normal fluid supply and (3) indicates operating mode for maximal fluid supply. The signal from the level meter in the inlet chamber informs that the fluid level, for example, is close to overflow, and that the control system then will provide a signal to the motor (increase Hz) of increasing the speed of the filter belt to keep away. The different defined modes then provide a basis for defining maximal speed of, for example, 10 Hz (very low speed) when it is a low amount of fluid in the inlet chamber, at the same time as a high level is maintained to increase the filtering time and filter mat thickness. The V is the inlet chamber and the right foot in the V is the filter belt. Horizontal lines indicate the lowest and highest fluid level. As can be seen from the Figure, it is a full fluid level for all, but the speed is very different (Hz). This means that, independent of the velocity of the supplied fluid (amount from the pumps), the system will be able to maintain a high level and minimal speed. This means not that the purification efficiency is the same for all speeds, but that the purification efficiency is maximal for all speeds, which is what is desired to achieve by means of the present invention. Maximal purification efficiency for all speeds is achieved by having the highest possible fluid level in the inlet chamber and the lowest possible speed of the filter belt in relation to the supplied fluid amount.

Without the use of modes, the filter belt would have constantly overflowed at maximal fluid amounts and mode 3 of the Figure. Similarly, the filter belt would have chased through the fluid very quickly if the system was not provided with mode 1 at low supplied fluid amounts.

### Modifications

The method can also be used on several plants which include several inlet chambers and filter belts.

Several such plants, as described above, can be arranged in parallel and fluid supplied can be distributed with an inlet device or a distribution box which provides an approximately even supply of fluid to the filters.

The system can be provided with a learning function which automatically set up operating modes. This requires some time used for all the fluid amounts to be registered and operated optimally. A learning function can also be used to optimize the operating modes defined in the system in advance. Alternatively the learning function can be used to optimize the preset operating modes.

Information from a central monitoring station can be used to optimize the system according to the invention further. The information can be the frequency of frequency-controlled pumps supplying fluid to the plant, to find out the supplied fluid amount. This can be as an addition to a flow meter or instead of a flow meter.

The system can be arranged to run in special safety modes if different critical situations should arise, such as error situations, e.g. if an error arises in the level meter, the system will automatically operate in an operating mode which ensures that overflow do not occur.

The system can also be arranged to handle other special situations. An example of a special situation which can arise is consequences of periods of low rainfall or low fluid supply to the system. This results in clogging of the pipeline network leading to the system. When it after a longer period of low fluid supply, then comes a normal or large fluid supply, this will loosen the clogging from the pipeline network and it is then supplied to the system/filter belt in addition to the normal or large fluid amount. This is a situation called "first flush" in the technical language. This situation results in that undesired elements/objects/particles enter the filter belt and can thus clog it, which can result in that the filter belt overflows. To prevent this, the system can be arranged with a state which perform controlling on basis of time perspective/history, which will result in that when there has been a low fluid supply for a longer period, followed by a normal or large amount, the filter belt, for example, should run with high/maximum speed for a period to ensure that the filter belt not overflows. Other similar states can accordingly also be provided in the system to handle special situations.

## Claims

1. A method for creating a filter mat on a filter belt to achieve high purification efficiency/particle reduction, at the same time as the current supplied fluid amount is being processed, **characterized in that** the method includes the following steps:
a) measuring an amount of fluid currently being supplied to an inlet chamber by measuring means (14) arranged to or within an inlet of the inlet chamber,
b) based on supplied fluid amount choose operating mode defining predefined start and stop level in the inlet chamber in relation to supplied fluid amount and predefined speed of the filter belt for the different levels as settings for drive means controlling the filter belt for maintaining high fluid level in the inlet chamber and low speed of the filter belt in relation to supplied fluid amount and amount of particles, for therethrough to maximize thickness of substance creating a filter mat on the filter belt without the filter belt being overflown,
c) measuring fluid level in the inlet chamber by means of level measuring means (15) arranged in connection with the inlet chamber to gain information concerning a variation in fluid amount and amount of particles,
d) adjusting acceleration time, delay and retardation time for the chosen operating mode based on information about the variation in the fluid level and amount of particles in the inlet chamber and providing information to the drive means for controlling the speed of the filter belt to affect the chosen operating mode,
e) acquiring information on actual state of the drive means and filter belt to continuously adjust the settings for the drive means based on the difference between actual state and adjusted acceleration time, delay and retardation time,
f) continuously repeating the steps a)-e).

2. A method according to claim 1, **characterized in that** step a) includes measuring supplied fluid amount, at any time, to an inlet chamber.

3. Method according to claim 1, **characterized in that** step b) includes based on the at each time supplied fluid amount choose operating mode according to history among different predefined operating modes.

4. A method according to claims 1-3, **characterized in that** step b) includes choosing operating mode from predefined operating modes, defining start and stop levels in the inlet chamber in relation to the actual supplied fluid amount, and defining the speed of the filter belt for the different levels.

5. A method according claim 1, **characterized in that** the different operating modes are predefined and that they are adapted to the dimensioning of the plant.

6. A method according to claim 5, **characterized in that** the settings for the operating modes are preset by experience/testing.

7. A method according claim 1, **characterized in that** the method includes a learning function for automatic setting of operating modes.

8. A method according claim 1, **characterized in that** the method further includes safety modes for different critical situations which can arise, such as error situations, and/or modes to handle other special situations which can arise, such as clogging of the pipeline network.

9. A system for carrying out the method according to claims 1-8, which system includes an inlet (10) supplying fluid to an inlet chamber (11), down in which inlet chamber (11) one or more endless filter belt (12) run, which filter belt(s) (12) is/are run by drive means (16), **characterized in that** the system further includes:
- means (14) for measuring supplied fluid amount to the inlet chamber (11), which means (14) are arranged to/in the inlet (10),
- means (15) for measuring fluid level (100) in the inlet chamber (11),
- control means (13) provided with software/algorithms and/or programmed for carrying out the method according to claims 1-8, hereunder operating modes defining predefined start and stop levels in the inlet chamber in relation to supplied fluid amount and predefined speed of the filter belt for the different levels as settings for the drive means (16) controlling the filter belt(s) (12), and
- state means for providing information on actual state of the drive means (16) and filter belt(s) (12).

10. A system according to claim 9, **characterized in that** the means (14) for measuring supplied fluid amount to the inlet chamber (11) is an electromagnetic flow meter.

11. A system according to claim 9, **characterized in that** the means (15) for measuring fluid level (100) in the inlet chamber (11) is a submersible pressure transmitter or float, arranged in the inlet chamber (11).

12. A system according to claim 9, **characterized in that** the control means (13) is a PLC.

13. A system according to claim 9, **characterized in that** the system includes means for careful removal of sludge from the filter belt and means for effective cleaning of the filter belt, which means are non-mechanical means, to avoid contact with the particle side of the filter belt.

## Patentansprüche

1. Verfahren zur Erzeugung einer Filtermatte auf einem Filterband, um eine hohe Reinigungseffizienz/Partikelreduzierung zu erreichen, und zwar zur gleichen Zeit, zu der die gegenwärtige zugeführte Fluidmenge verarbeitet wird, **dadurch gekennzeichnet, dass** das Verfahren die folgenden Schritte umfasst:
a) Messen einer gegenwärtig einer Einlasskammer zugeführten Fluidmenge durch eine Messeinrichtung (14), die an einem oder innerhalb eines Einlasses der Einlasskammer angeordnet ist,
b) Auswählen eines Betriebsmodus, der ein vordefiniertes Start- und Stoppniveau in der Einlasskammer in Bezug auf die zugeführte Fluidmenge und eine vordefinierte Geschwindigkeit des Filterbandes für die verschiedenen Niveaus als Einstellungen für eine Antriebseinrichtung definiert, die das Filterband steuert, auf der Grundlage der zugeführten Fluidmenge, um ein hohes Fluidniveau in der Einlasskammer und eine niedrige Geschwindigkeit des Filterbandes im Verhältnis zu der zugeführten Fluidmenge und der Partikelmenge beizubehalten, um dadurch die Dicke des Stoffes zu maximieren, der eine Filtermatte auf dem Filterband bildet, ohne dass das Filterband überflutet würde,
c) Messen des Fluidniveaus in der Einlasskammer mittels der Niveaumesseinrichtung (15), die in Verbindung mit der Einlasskammer angeordnet ist, um Informationen bezüglich einer Schwankung der Fluidmenge und der Partikelmenge zu erhalten,
d) Anpassen der Beschleunigungszeit, Verzögerungs- und Verlangsamungszeit für den gewählten Betriebsmodus auf der Grundlage von Informationen über die Schwankungen des Fluidniveaus und der Partikelmenge in der Einlasskammer und bereitstellen von Informationen für die Antriebseinrichtung zur Steuerung der Geschwindigkeit des Filterbandes, um den gewählten Betriebsmodus zu beeinflussen,
e) Erfassen von Informationen über den tatsächlichen Zustand der Antriebseinrichtung und des Filterbandes, um die Einstellungen für die Antriebseinrichtung auf der Grundlage des Unterschiedes zwischen dem tatsächlichen Zustand und der angepassten Beschleunigungszeit, Verzögerungs- und Verlangsamungszeit kontinuierlich anzupassen,
f) kontinuierliches Wiederholen der Schritte a) - e).

2. Verfahren nach Anspruch 1, **dadurch gekennzeichnet, dass** Schritt a) das Messen der einer Einlasskammer zugeführten Fluidmenge zu jeder Zeit einschließt.

3. Verfahren nach Anspruch 1, **dadurch gekennzeichnet, dass** Schritt b) das Auswählen des Betriebsmodus gemäß einer Historie aus unterschiedlichen vordefinierten Betriebsmodi auf der Grundlage der zu jeder Zeit zugeführten Fluidmenge einschließt.

4. Verfahren nach den Ansprüchen 1 bis 3, **dadurch gekennzeichnet, dass** Schritt b) das Wählen des Betriebsmodus aus vordefinierten Betriebsmodi, das Definieren von Start- und Stoppniveaus in der Einlasskammer in Bezug auf die tatsächlich zugeführte Fluidmenge und das Definieren der Geschwindigkeit des Filterbandes für die verschiedenen Niveaus einschließt.

5. Verfahren nach Anspruch 1, **dadurch gekennzeichnet, dass** die verschiedenen Betriebsmodi vordefiniert sind und dass sie an die Größenabmessung der Anlage angepasst sind.

6. Verfahren nach Anspruch 5, **dadurch gekennzeichnet, dass** die Einstellungen für die Betriebsmodi aufgrund von Erfahrung/Tests voreingestellt werden.

7. Verfahren nach Anspruch 1, **dadurch gekennzeichnet, dass** das Verfahren eine Lernfunktion für die automatische Einrichtung von Betriebsmodi einschließt.

8. Verfahren nach Anspruch 1, **dadurch gekennzeichnet, dass** das Verfahren ferner Sicherheitsmodi für verschiedene kritische Situationen, die entstehen können, einschließt, wie etwa Fehlersituationen, und/oder Modi, um andere Sondersituationen, die entstehen können, zu behandeln, wie etwa die Verstopfung des Rohrleitungsnetzes.

9. System zur Durchführung des Verfahrens nach den Ansprüchen 1 bis 8, wobei das System einen Einlass (10) zur Zufuhr von Fluid zu einer Einlasskammer (11) enthält, wobei unten in der Einlasskammer (11) ein oder mehrere Endlos-Filterbänder (12) laufen, welches Filterband bzw. welche Filterbänder (12) von einer Antriebseinrichtung (16) angetrieben werden, **dadurch gekennzeichnet, dass** das System ferner enthält:
- eine Einrichtung (14) zum Messen der der Einlasskammer (11) zugeführten Fluidmenge, welche Einrichtung (14) an/in dem Einlass (10) angeordnet ist,
- eine Einrichtung (15) zum Messen des Fluidniveaus (100) in der Einlasskammer (11),
- eine Steuereinrichtung (13), die mit Software/Algorithmen versehen ist und/oder dafür programmiert ist, das Verfahren nach den Ansprüchen 1 bis 8 auszuführen, worunter sich Betriebsmodi befinden, die vordefinierte Start- und Stopniveaus in der Einlasskammer im Verhältnis zu der zugeführten Fluidmenge und eine vordefinierte Geschwindigkeit des Filterbandes für verschiedene Niveaus als Einstellungen für die Antriebseinrichtung (16) definieren, die das Filterband bzw. die Filterbänder (12) steuert, und
- eine Statuseinrichtung, um Informationen über den tatsächlichen Status der Antriebseinrichtung (16) und des Filterbandes bzw. der Filterbänder (12) bereitzustellen.

10. System nach Anspruch 9, **dadurch gekennzeichnet, dass** die Einrichtung (14) zum Messen der der Einlasskammer (11) zugeführten Fluidmenge eine elektromagnetische Durchflussmesseinrichtung ist.

11. System nach Anspruch 9, **dadurch gekennzeichnet, dass** die Einrichtung (15) zum Messen des Fluidniveaus (100) in der Einlasskammer (11) eine tauchfähige Druckübertragungseinrichtung oder ein Schwimmer ist, die bzw. der in der Einlasskammer (11) angeordnet ist.

12. System nach Anspruch 9, **dadurch gekennzeichnet, dass** die Steuereinrichtung (13) ein PLC ist.

13. System nach Anspruch 9, **dadurch gekennzeichnet, dass** das System eine Einrichtung zur sorgfältigen Entfernung von Schlamm von dem Filterband und eine Einrichtung zur wirksamen Reinigung des Filterbandes aufweist, welche Einrichtung eine nicht-mechanische Einrichtung ist, um den Kontakt mit der Partikelseite des Filterbandes zu vermeiden.

## Revendications

1. Procédé de création d'un mat filtrant sur une bande filtrante pour atteindre une efficacité de purification/réduction de particules élevée, en même temps que le traitement de la quantité de fluide en cours d'introduction, **caractérisé en ce que** le procédé comprend les étapes suivantes :
a) la mesure d'une quantité de fluide qui est en cours d'introduction dans une chambre d'entrée par un moyen de mesure (14) disposé sur ou au sein d'une entrée de la chambre d'entrée,
b) sur la base de la quantité de fluide introduite, le choix d'un mode de fonctionnement définissant un niveau prédéfini de départ et d'arrêt dans la chambre d'entrée en ce qui concerne la quantité de fluide introduite et une vitesse prédéfinie de la bande filtrante pour les différents niveaux en tant que réglages d'un moyen d'entraînement commandant la bande filtrante pour maintenir un niveau élevé de fluide dans la chambre d'entrée et une faible vitesse de la bande filtrante par rapport à la quantité de fluide introduite et à la quantité de particules, pour passer à travers celle-ci afin de maximiser l'épaisseur d'une substance créant un mat filtrant sur la bande filtrante sans que la bande filtrante soit engorgée,
c) la mesure d'un niveau de fluide dans la chambre d'entrée par un moyen de mesure de niveau (15) agencé en liaison avec la chambre d'entrée pour obtenir des informations concernant une variation de quantité fluide et de quantité de particules,
d) l'ajustement d'un temps d'accélération, d'un délai et d'un temps de retardement pour le mode de fonctionnement choisi sur la base d'informations concernant la variation du niveau de fluide et de la quantité de particules dans la chambre d'entrée et la fourniture des informations au moyen d'entraînement pour réguler la vitesse de la bande filtrante afin d'affecter le mode de fonctionnement choisi,
e) l'acquisition d'informations concernant l'état réel du moyen d'entraînement et de la bande filtrante pour ajuster continuellement les réglages du moyen d'entraînement sur la base de la différence entre l'état du moment et le temps d'accélération ajusté, le délai ajusté et le temps de retardement ajusté,
f) la répétition continue des étapes a) à e).

2. Procédé selon la revendication 1, **caractérisé en ce que** l'étape a) comprend la mesure de la quantité de fluide introduite, à n'importe quel moment, dans une chambre d'entrée.

3. Procédé selon la revendication 1, **caractérisé en ce que** l'étape b) comprend, sur la base de la quantité de fluide introduite à chaque moment, le choix d'un mode de fonctionnement en fonction d'un historique parmi différents modes de fonctionnement prédéfinis.

4. Procédé selon les revendications 1 à 3, **caractérisé en ce que** l'étape b) comprend le choix d'un mode de fonctionnement parmi des modes de fonctionnement prédéfinis, définissant des niveaux de départ et d'arrêt dans la chambre d'entrée par rapport à la quantité de fluide introduite sur le moment, et définissant la vitesse de la bande filtrante pour les différents niveaux.

5. Procédé selon la revendication 1, **caractérisé en ce que** les différents modes de fonctionnement sont prédéfinis et **en ce qu'**ils sont adaptés aux dimensions de l'installation.

6. Procédé selon la revendication 5, **caractérisé en ce que** les réglages pour les modes de fonctionnement sont préétablis par l'expérience/des tests.

7. Procédé selon la revendication 1, **caractérisé en ce que** le procédé comprend une fonction d'apprentissage pour le réglage automatique des modes de fonctionnement.

8. Procédé selon la revendication 1, **caractérisé en ce que** le procédé comprend en outre des modes de sécurité pour différentes situations critiques pouvant survenir, telles que des situations d'erreur, et/ou des modes pour gérer d'autres situations spéciales pouvant survenir, telles que l'obstruction du réseau de conduites.

9. Système permettant de mettre en oeuvre le procédé selon les revendications 1 à 8, ledit système comprenant une entrée (10) introduisant un fluide dans une chambre d'entrée (11), une ou plusieurs bandes filtrantes sans fin (12) se déplaçant en bas de ladite chambre d'entrée (11), la ou les bandes filtrantes (12) étant entraînées par un moyen d'entraînement (16), **caractérisé en ce que** le système comprend en outre :
- un moyen (14) servant à mesurer la quantité de fluide introduite dans la chambre d'entrée (11), ledit moyen (14) étant disposé sur/dans l'entrée (10),
- un moyen (15) servant à mesurer le niveau de fluide (100) dans la chambre d'entrée (11),
- un moyen de commande (13) doté d'un logiciel/d'algorithmes et/ou programmé pour mettre en oeuvre le procédé selon les revendications 1 à 8, fournissant des modes de fonctionnement définissant des niveaux prédéfinis de départ et d'arrêt dans la chambre d'entrée en ce qui concerne la quantité de fluide introduite et une vitesse prédéfinie de la bande filtrante pour les différents niveaux en tant que réglages du moyen d'entraînement (16) commandant la ou les bandes filtrantes (12), et
- un moyen d'état servant à fournir des informations sur l'état du moment du moyen d'entraînement (16) et de la bande filtrante ou des bandes filtrantes (12).

10. Système selon la revendication 9, **caractérisé en ce que** le moyen (14) servant à mesurer la quantité de fluide introduite dans la chambre d'entrée (11) est un débitmètre électromagnétique.

11. Système selon la revendication 9, **caractérisé en ce que** le moyen (15) servant à mesurer le niveau de fluide (100) dans la chambre d'entrée (11) est un transmetteur de pression submersible ou un flotteur, disposé dans la chambre d'entrée (11).

12. Système selon la revendication 9, **caractérisé en ce que** le moyen de commande (13) est un PLC.

13. Système selon la revendication 9, **caractérisé en ce que** le système comprend un moyen permettant de retirer soigneusement une boue de la bande filtrante et un moyen permettant de nettoyer efficacement la bande filtrante, lesdits moyens étant des moyens non mécaniques, pour éviter un contact avec le côté particule de la bande filtrante.
